# EUROPEAN PATENT APPLICATION

(11) **EP 0 709 257 A1**
(43) Date of publication of application: **01.05.1996**
(21) Application number: 95307762.5
(22) Date of filing: 31.10.1995
(51) Int. Cl.: B60R 21/00

(54) **Vehicle airbag deployment control apparatus and method**

(30) Priority: 31.10.1994 KR 9428168
(71) Applicant: DAEWOO ELECTRONICS CO., LTD, Seoul (KR)
(72) Inventor: Chae, Kyeong-Seon, Dobong-ku, Seoul (KR)
(74) Representative: Needle, Jacqueline

(57) **Abstract**

The invention provides for an airbag deployment control apparatus and method and includes the use of a three-direction accelerometer (10) and a crash-pattern discriminating means (20) in order to reliably distinguish a slight crash from a serious crash or vice versa. The three-direction accelerometer (10) generates deceleration signals of forward, lateral and vertical directions of a vehicle. The deceleration signals generated are input to an integrator (16) to be converted into three-direction velocity change signals. In the crash-pattern discriminating means (20), crash patterns are discriminated by use of the three-direction velocity change signals. In an airbag-deployment determining means (22), the velocity change is compared with a threshold for a crash pattern discriminated and an airbag deploying signal is output to an airbag deploying portion when the velocity change exceeds the threshold. The threshold is predetermined and classified by crash patterns and, in practice, since the delayed deployment of the airbag is prevented, it is possible to protect vehicle occupants reliably.

## Description

The present invention relates to a vehicle airbag deployment control apparatus and method.

To protect occupants in a vehicle in case of a collision, various safety devices have been developed. One such device, an airbag system, prevents the occupants from colliding directly with a solid body or surface in the vehicle by means of an inflated airbag. The airbag system generally comprises crash sensing means such as an accelerometer, an ECU for determining whether the airbag has to be deployed and connected to the crash sensing means to receive a signal therefrom, a gas generating means for generating gas in response to an airbag deploying signal output from the ECU, and an airbag module for receiving the gas delivered from the gas generating means and to be inflated thereby. The gas generating means is formed of a squib arranged for combustion upon receiving the airbag deploying signal and an inflator for generating the gas to inflate the airbag module. The squib is activated by the airbag deploying signal which can then also actuate the inflator to generate and deliver the required gas.

In the airbag system, it is most important that the need to deploy the airbag is determined accurately under a variety of circumstances. If the airbag is not deployed in a serious crash, the vehicle occupant may suffer fatal injury. If the airbag is deployed in a slight crash, an accident may take place due to blockage of the visual field of the driver. A reinstallation cost of the airbag system is also incurred.

To achieve the most effective protection of vehicle occupants, the occupants should come in contact with the airbag when the airbag is fully deployed. To achieve this an optimum ignition timing point classified by crash patterns, should be accurately determined. Generally, the optimum ignition timing point is determined based upon the so-called, "5 inch - 30 ms criterion", i.e. that head displacement shall be less than 5 inches before the airbag achieves its full deployment and that it takes approximately 30 ms to fully deploy the airbag. Accordingly, the determination of whether to deploy the airbag should precede the occurrence of the optimum ignition timing point.

As described above, the performance of an airbag system is mainly influenced by whether the need to deploy the airbag can be determined before the optimum ignition timing point.

Generally, an airbag system operates with the deceleration signal from an accelerometer being compared with a threshold value and the airbag is deployed in the event that the deceleration signal is greater than the threshold value. Therefore, the accurate setting of the threshold value has a direct effect on the reliability of operation of the airbag system.

However, because a threshold is utilized in prior-art airbag systems which is not classified by crash patterns, vehicle occupants are not fully protected in some instances. For example, it is difficult to protect an occupant in a vehicle having a soft front body.

To overcome such a problem faced in the prior-art airbag systems, soft portions of the vehicle body are strengthened and/or sensors are further installed in the crush zone or other portions of a vehicle so that the velocity change of a vehicle can be detected quickly. In this case, however, the development cost of the airbag system and the installation cost thereof become high, since a number of crash tests are required in order to determine the mounting location of sensors and the structure of the vehicle also needs to be modified.

The invention seeks to provide for an airbag control apparatus and method having advantages over known airbag control apparatus and methods.

In accordance with one aspect of the present invention there is provided vehicle airbag deployment control apparatus characterised by means for producing a three-direction deceleration signal, integrator means for integrating said three-direction deceleration signal so as to produce a three-direction velocity change signal, first comparator means for comparing one of said three-direction deceleration signals with a first threshold value, second comparator means for comparing the output of said integrator means with another threshold value, airbag deployment means arranged to receive an output from said second comparator means and having a variable threshold value arranged to be compared with one of said three-direction velocity change signals for controlling the deployment of the airbag.

In accordance with another aspect of the present invention there is provided vehicle airbag deployment control apparatus characterised by three-direction deceleration sensing means for sensing vehicle deceleration and generating three-direction deceleration signals;
low-pass filter means for removing high-frequency components of said three-direction deceleration signals output from said three-direction deceleration sensing means;
integrator means for integrating the output from said low-pass filter means;
first-direction component comparing means for comparing a first-direction component of said output from said low-pass filter means with a threshold for said first direction;
crash-pattern discriminating means for discriminating crash patterns based upon the output of said integrator means and for generating a crash-pattern information value and comparing the output from said integrator means with a threshold for a crash pattern corresponding to said crash-pattern information value;
airbag-deployment determining means responsive to said crash-pattern discriminating means for determining whether an airbag is to be deployed;
clock signal generating means for generating clock signals in order to provide a common control signal, said clock signal generation means being reset in response to a reset signal output from said first-direction component comparing means when said first-direction component exceeds said threshold for said first direction;
duration detecting means arranged to be reset responsive to said clock signal generating means for detecting the duration of a period for which said first-direction component exceeds said threshold for said first direction and providing a reset signal to said first-direction component comparing means to reset said first-direction component comparing means when said duration period does not exceed a predetermined period; and
airbag deploying means for generating a signal for deploying an airbag in response to an airbag deploying signal from said airbag-deployment determining means.

In accordance with yet another aspect of the present invention there is provided a method of controlling vehicle airbag deployment, characterised by the steps of:
(a) sensing vehicle deceleration and generating three-direction deceleration signals;
(b) removing high-frequency components of said three-direction deceleration signals;
(c) comparing a first-direction component of said three-direction deceleration signals with a threshold for first direction;
(d) resetting a clock signal when said first-direction component exceeds said threshold for said first direction as a result of the comparison in step (c) ;
(e) determining whether said first-direction component exceeds said threshold for said first direction for at least a predetermined period;
(f) integrating said three-direction deceleration signals when said predetermined period in step (e) is exceeded;
(g) discriminating a crash pattern based upon the integral value of said three-direction deceleration signals and generating a crash-pattern information value; and
(h) comparing said integral value with a threshold for said crash pattern corresponding to said crash-pattern information value so as to determine whether an airbag is to be deployed.

It is advantageously then possible to reliably distinguish a slight crash from a serious crash or vice versa by the airbag deployment control apparatus and method embodying the present invention and using the three-direction deceleration signals, while such control is not possible in the prior-art systems using one-direction deceleration signal.

The present invention advantageously provides an airbag deployment control apparatus capable of reliably generating the airbag deployment signal on a basis of the three-direction deceleration signal from a three-direction accelerometer.

Another advantage of the present invention is that an airbag deployment control method capable of reliably generating the airbag deployment signal on a basis of the three-direction deceleration signal from a three-direction accelerometer can be provided.

As mentioned, in an airbag deployment control apparatus and method of the present invention, it is possible to reliably distinguish a slight crash from a serious crash or vice versa using the three-direction deceleration signals. Further, the development cost of the airbag system and the installation cost thereof become low, since the number of crash tests is reduced and the structure of a vehicle does not need to be changed.

The invention is described further hereinafter, by way of example only, with reference to the accompanying drawings, in which:
Fig. 1 is a block diagram of an airbag deployment control apparatus embodying the present invention;
Fig. 2 is a flow chart of an airbag deployment control method embodying the present invention;
Fig. 3 is a flow chart illustrating the procedures for setting the variable threshold classified by crash patterns;
Fig. 4 is a graph showing the primary integral value of the deceleration signal along the front-rear direction of vehicle classified by crash patterns;
Fig. 5 is a graph showing the primary integral value of the deceleration signal along the right-left direction of vehicle classified by crash patterns;
Fig. 6 is a graph showing the primary integral value of the deceleration signal along the upper-lower direction of vehicle classified by crash patterns; and
Fig. 7 is a graph showing the primary integral value of the deceleration signal along the front-rear direction of the vehicle having a soft front body.

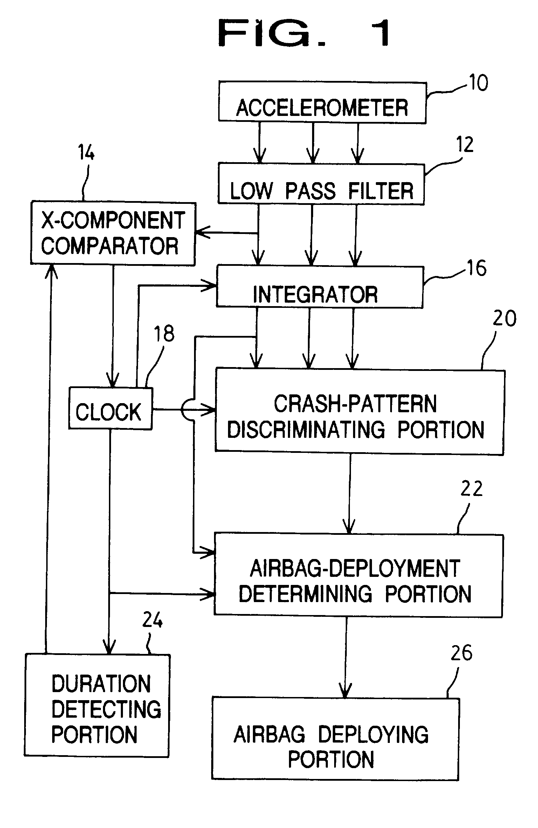

In Fig. 1, an accelerometer 10 generates three deceleration signals along X, Y and Z directions, or axes, perpendicular to one another. The accelerometer 10 may be composed of three one-direction accelerometers or one three-direction accelerometer. In the embodiment, the X direction is the travelling direction of a vehicle, wherein a forward direction of the vehicle is a positive direction. The Y direction is a right-left direction of a vehicle wherein a left direction is a positive direction. The direction is an upper-lower direction of a vehicle wherein a upper direction is a positive direction. The three-direction deceleration signals generated from the accelerometer 10 include high frequency components caused by vibration and so on. To remove the high frequency components, the three-direction deceleration signals are input to a low-pass filter 12 for passing only low-frequency components.

The three-direction deceleration signals output from the low-pass filter 12 are input to an integrator 16 and the X direction deceleration signal of the three-direction deceleration signals also is input to an X-component comparator 14. In the X-component comparator 14, the X direction deceleration signal is compared with a first threshold value. The first threshold value is for determining whether a vehicle is travelling under the normal conditions. In the X-component comparator 14, storage means may be further included for storing the first threshold value. If the X direction deceleration signal is greater than the first threshold, the X-component comparator 14 outputs a reset signal to a clock 18, so that the clock 18 is reset. A crash timing point, i.e. at zero seconds, is determined by the reset signal from the X-component comparator 14.

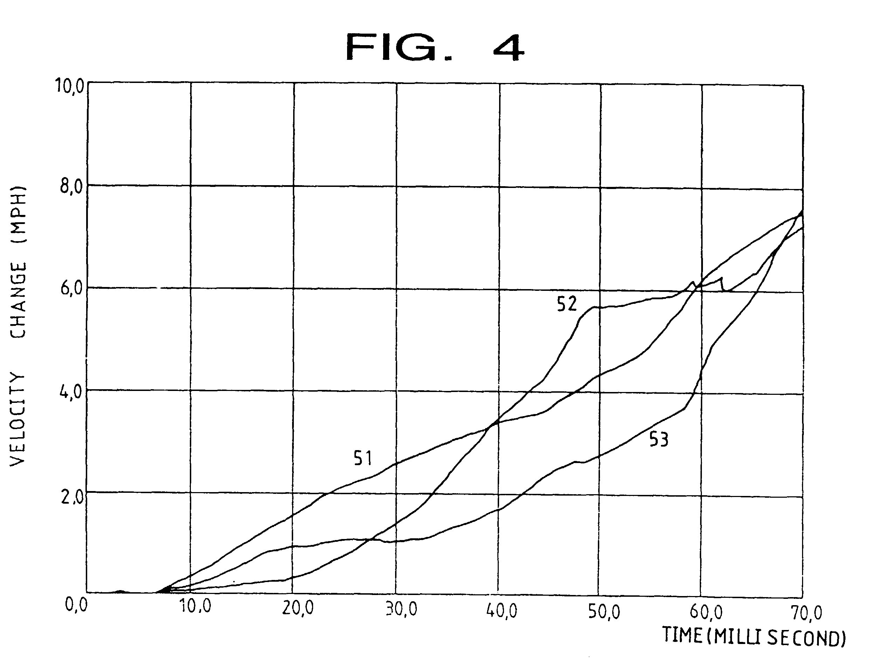

The three-direction deceleration signals passing through the low-pass filter 12 are input to the integrator 16 and three-direction velocity change signals are output from the integrator 16 as shown in Figs. 4 to 6. The three-direction velocity change signals are input to crash-pattern discriminating means 20, in which they are compared with a crash-pattern discriminating threshold to discriminate the crash pattern. In the illustrated embodiment, the crash pattern is discriminated by use of a primary integral value of the three-direction deceleration signals, however a secondary integral value thereof could be utilized.

From the crash-pattern discriminating means 20, crash-pattern information is output to an airbag-deployment determining means 22. Further, an X-component signal of the three-direction velocity change signals from the integrator 16 is input to the airbag-deployment determining means 22. In the airbag-deployment determining means 22, a second threshold value is changed in response to crash pattern information from the crash-pattern discriminating portion 20 and the X-component signal of the three-direction velocity change signals is compared with the changed second threshold. In the airbag deployment determining means 22, storage means may be included for storing second thresholds varied by crash patterns. In the illustrated embodiment, the deployment of the airbag is determined by use of a primary integral value of an X-component signal of the three-direction signals although a secondary integral value thereof could be utilized. Alternatively, the composition signal of the three-direction velocity change may be utilized to determine whether the airbag is to be deployed instead of the X-component signal thereof.

If the X-component signal of the three-direction velocity change signals is greater than the second threshold, the airbag-deployment determining portion 22 outputs an airbag deploying signal to an airbag deploying means 26. Subsequently, the airbag deploying means 26 transmits an electrical signal to a squib associated with the airbag deploying means 26, so that the airbag can be deployed.

The clock 18, which is reset by the reset signal generated from X-component comparator 14, is arranged to operate the integrator 16, the crash-pattern discriminating means 20, the airbag-deployment determining means 22 and a duration detecting means 24. The clock 18 provides for a uniform standard time for overall control of the apparatus. The duration detecting portion 24 determines the duration for which the X-component signal of the deceleration signals exceeds the first threshold value. If the duration determined does not exceed a predetermined time, for example 100 ms, the duration detecting means 24 transmits a reset signal to reset the X-component comparator 14. The predetermined time is set so that if the deployment of the airbag is unnecessary, the airbag is not deployed even though the vehicle may not be travelling in a normal manner.

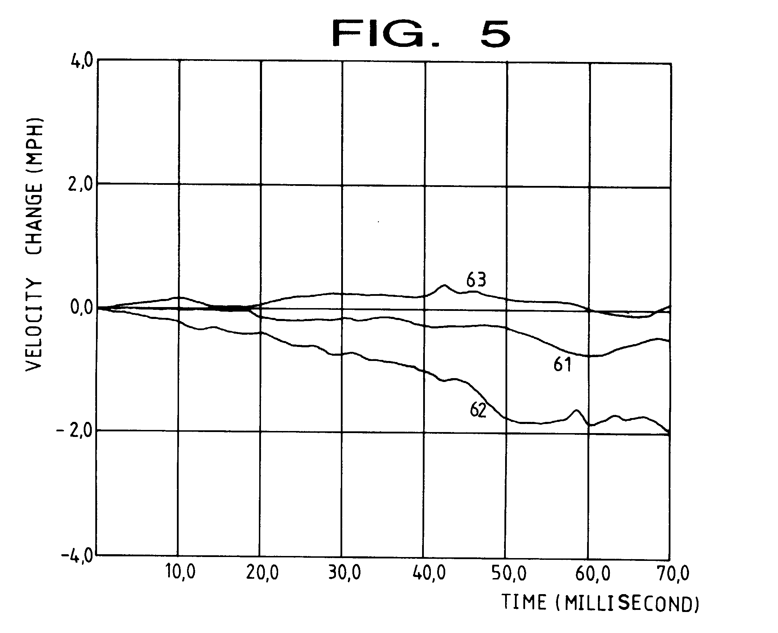

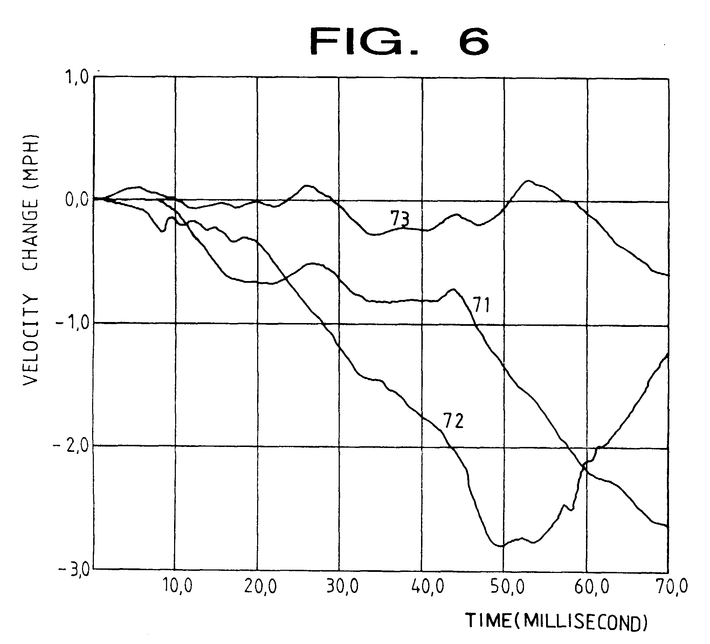

Fig. 4 shows velocity charge (VC) curves of X-direction motion classified by crash-patterns, Fig. 5 shows VC curves of Y-direction motion classified by crash-patterns and Fig. 6 shows VC curves of Z-direction motion classified by crash-patterns. In Figs. 4 to 6, 51 61 and 71 are VC curves at an 8-mph frontal crash, 52, 62 and 72 are VC curves at a 14-mph 30 degree-angled crash, and 53, 63 and 73 are VC curves at a 16-mph centre-pole crash. As shown, the 14-mph 30 degree-angled crash can be distinguished from the 8-mph frontal crash, at which the deployment of the airbag is not required, by means of the relatively steep velocity change in the Y and Z directions. The 16-mph centre-pole crash can be distinguished from the 8-mph frontal crash by means of the relatively gentle rise of the velocity change in the X direction and the relatively small velocity change in the Y and Z directions. Therefore, the crash patterns can be differentiated if appropriate thresholds classified by crash patterns are set.

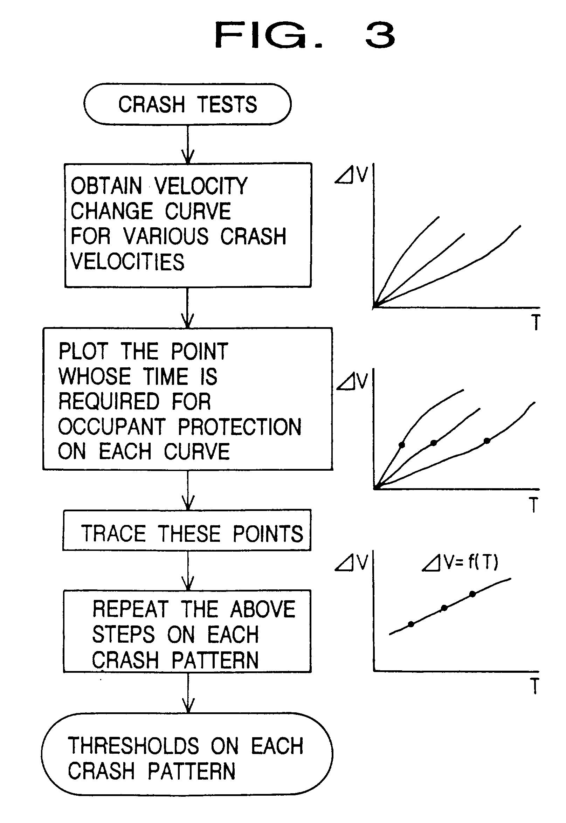

With reference to Fig. 3, one example of a method for setting the second threshold value will be described. First, the crash patterns are classified by reference to a pattern which is considered to represent the state when controlling the deployment of airbag. Crash tests are performed at the various crash velocities under each crash pattern classified.

The VC curves are then obtained as the result of the crash tests. The optimum ignition timing point is plotted on each VC curve. The threshold curve is drawn by tracing these points plotted and is obtained as a function with respect to time. Thus the second threshold classified by the crash patterns is obtained as a function with respect to time. The second thresholds become variable thresholds changed along with time. A threshold value, which is compared with an integral value of the X-direction deceleration signal in order to determine whether the airbag is to be deployed, is obtained by substituting a standard time generated from the clock 18 into the threshold function.

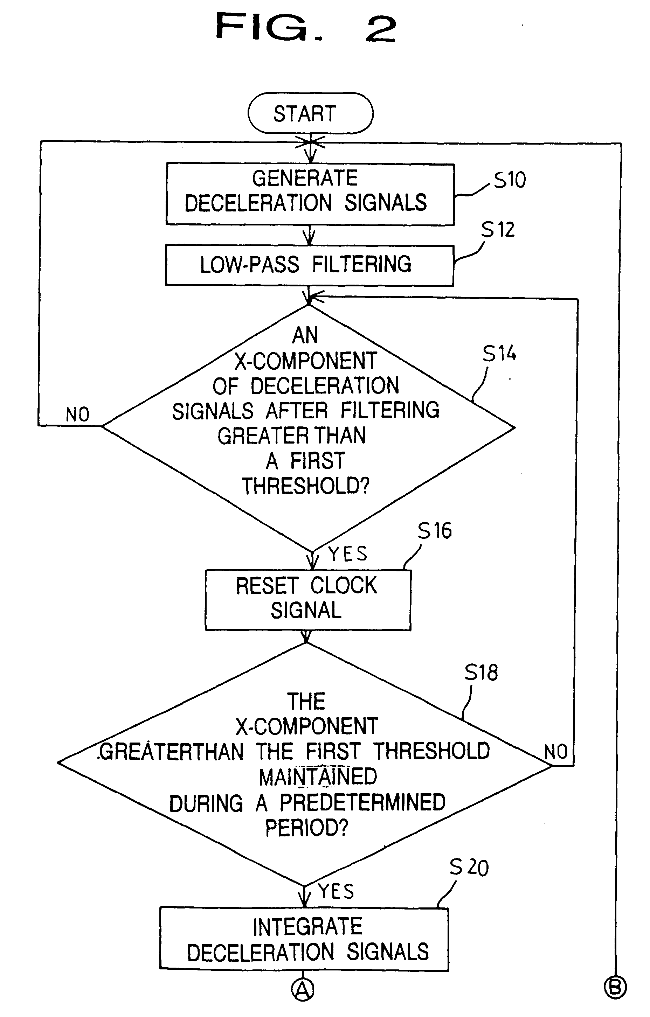

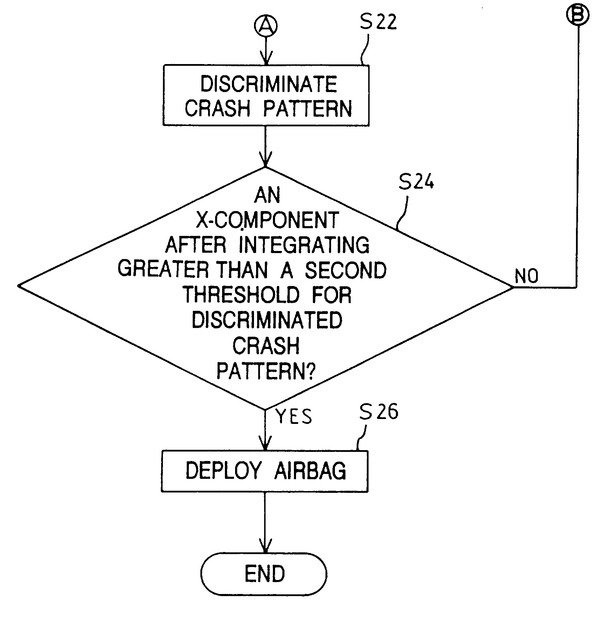

The overall operation of the airbag deployment control apparatus embodying the present invention will be described with reference to the flow chart shown in Fig. 2.

In step S10, the three-direction deceleration signals of vehicle are generated by the accelerometer 10. The high frequency components of the three-direction deceleration signal are removed by passing the signal through a low-pass filter 12 (in step S12). The X-direction component of the three-direction deceleration signal generated in step S12 is compared with the first threshold by means of X-component comparator 14 (in step S14). If the X-direction component is less than the first threshold value, the process returns to S10. If the X-direction component is greater than the first threshold value, the process advances to step S16 to reset the clock signal.

Subsequently, it is determined whether this state of the X-direction component being greater than the first threshold is maintained during a predetermined period by means of a duration detecting portion 24 (in step S18). If it is not maintained for that period the process returns to step S14, However, if it is maintained for that period the three-direction deceleration signals are integrated by means of the integrator 16 (in step S20). Based upon the three-direction velocity changes obtained by such integration, the crash patterns are discriminated by means of crash-pattern discrimination means 20 (in step S22).

Next, the X-direction component of the three-direction velocity change signal is compared with the second threshold for the crash pattern discriminated (in step S24). If the X-component velocity change is greater than the second threshold value, the process advances to step S26 to deploy the airbag (in step S26). If the X-component velocity change is not greater than the second threshold value, the process returns to step S10.

Further, in the airbag deployment control apparatus embodying the present invention, the calibration is completed by only setting the variable threshold value classified by crash patterns with respect to a particular vehicle. As a result, the development cost of the airbag system and the installation costs thereof are low, since the number of crash tests is reduced and the structure of the vehicle does not need to be modified.

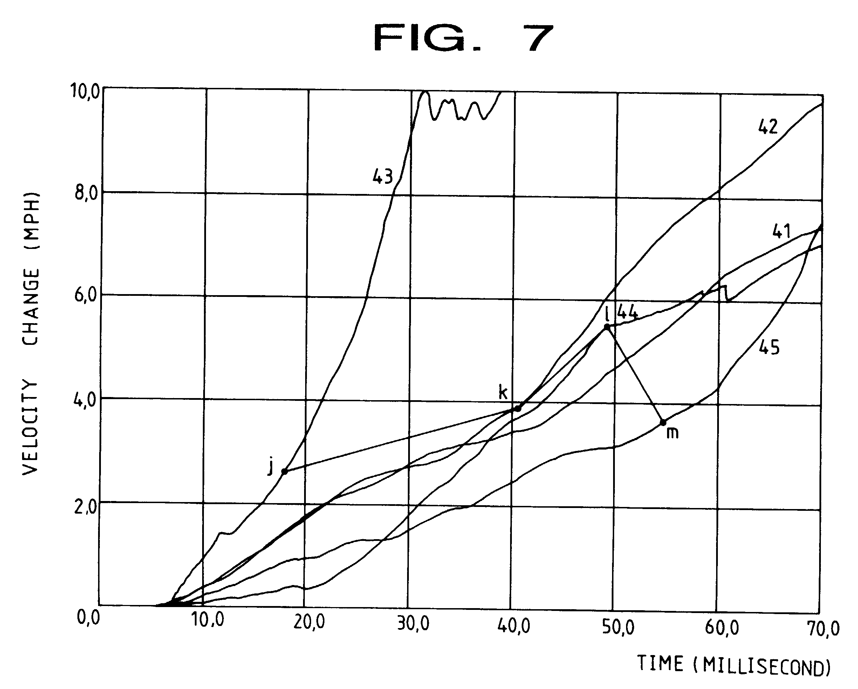

The advantages of the present invention will be appreciated further through reference to Fig. 7 which comprises a graph showing the relationship between velocity change and time obtained under various crash patterns in the vehicle having a soft front body. In Fig. 7, 41 designates a velocity change (VC) curve when the vehicle is subjected to an 8-mph frontal crash, 42 is a VC curve for a 12-mph frontal crash, 43 is a VC curve for a 30-mph frontal crash, 44 is a VC curve for a 14-mph 30 degree-angled crash, and 45 is a VC curve for a 16-mph centre-pole crash. VC curve 41 represents a so-called no-deploying limit below which the deployment of airbag is not accomplished. Points j, k, l and m indicate on each of the curves designate optimum ignition timing points. As shown, the airbag can be deployed before the optimum ignition timing point at a 12-mph frontal crash, a 30-mph frontal crash and a 14-mph 30 degree-angled crash, because points j, k and l are positioned in the upper area of VC curve 41 that is the no-deploying limit. However, the airbag cannot be deployed before the optimum ignition timing point at a 16-mph centre-pole crash, because point m is positioned in the lower area of VC curve 41.

While the present invention has been particularly shown and described with reference to preferred embodiment thereof, it will be understood by those skilled in the art that various changes in form and details may be effected therein without departing from the spirit and scope of the invention as defined by the appended claims.

## Claims

1. Vehicle airbag deployment control apparatus characterised by means (10) for producing a three-direction deceleration signal, integrator means (16) for integrating said three-direction deceleration signal so as to produce a three-direction velocity change signal, first comparator means (14) for comparing one of said three-direction deceleration signals with a first threshold value, second comparator means (20) for comparing the output of said integrator means (16) with another threshold value, airbag deployment means (22) arranged to receive an output from said second comparator means (20) and having a variable threshold value arranged to be compared with one of said three-direction velocity change signals for controlling the deployment of the airbag.

2. Vehicle airbag deployment control apparatus characterised by a three-direction deceleration sensing mens (10) for sensing vehicle deceleration and generating three-direction deceleration signals;
low-pass filter means (12) for removing high-frequency components of said three-direction deceleration signals output from said three-direction deceleration sensing means (10) ;
integrator means (16) for integrating the output from said low-pass filter means (12) ;
first-direction component comparing means (14) for comparing a first-direction component of said output from said low-pass filter means (12) with a threshold for said first direction;
crash-pattern discriminating means (20) for discriminating crash patterns based upon the output of said integrator means (16) and for generating a crash-pattern information value and comparing the output from said integrator means (16) with a threshold for a crash pattern corresponding to said crash-pattern information value;
airbag-deployment determining means (22) responsive to said crash pattern discriminating means for determining whether an airbag is to be deployed;
clock signal generating means (18) for generating clock signals in order to provide a common control signal, said clock signal generation means (18) being reset in response to a reset signal output from said first-direction component comparing means (14) when said first-direction component exceeds said threshold for said first direction;
duration detecting means (24) arranged to be reset responsive to said clock signal generating means (18) for detecting the duration of a period for which said first-direction component exceeds said threshold for said first direction and providing a reset signal to said first-direction component comparing means (14) to reset said first-direction component comparing means (14) when said duration period does not exceed a predetermined period; and
airbag deploying means (26) for generating a signal for deploying an airbag in response to an airbag deploying signal from said airbag-deployment determining means (22).

3. Apparatus as claimed in Claim 1 or 2, wherein said three-directions are mutually orthogonal X, Y and Z directions wherein said X-direction is a travelling direction of a vehicle, said Y-direction is a right-left direction thereof, said Z-direction is an upper-lower direction thereof, and said first direction comprises said X-direction.

4. Apparatus as claimed in Claim 2 or 3, wherein said first direction component comparing means (14) includes a first storage means for storing said threshold for said first direction, and said airbag-deployment determining means (22) includes a second storage means for storing said threshold for said crash pattern.

5. Apparatus as claimed in Claim 2, 3 or 4, wherein said crash-pattern discriminating means (20) discriminates crash patterns by comparing a primary integral value of said three-direction deceleration signals with a threshold for discriminating the crash patterns by way of said common control provided from said clock signal generating means (18).

6. Apparatus as claimed in Claim 2, 3, or 4, wherein said crash-pattern discriminating means (20) discriminates crash patterns by comparing a secondary integral value of said three-direction deceleration signals with a threshold for discrimination of crash patterns by way of said common control provided from said clock signal generating means (18).

7. Apparatus as claimed in any one of the Claims 2 to 6, wherein said airbag-deployment determining means (22) determines whether an airbag is to be deployed by comparing a primary integral value of said first-direction component of said three-direction deceleration signals with said threshold for said crash pattern corresponding to the crash pattern discriminated in said crash-pattern discriminating means (20).

8. Apparatus as claimed in any one of Claims 2 to 6, wherein said airbag-deployment determining means (22) determines whether an airbag is to be deployed by comparing a secondary integral value of said first-direction component of said three-direction deceleration signals with said threshold for crash pattern corresponding to the crash pattern discriminated in said crash-pattern discriminating means (20).

9. Apparatus as claimed in any one of Claims 2 to 6, wherein said airbag-deployment determining means (22) determines whether an airbag is to be deployed by comparing a primary integral value of a composition signal of said three-direction deceleration signals with said threshold for said crash pattern corresponding to the crash pattern discriminated in said crash-pattern discriminating means (20).

10. Apparatus as claimed in any one of Claims 2 to 6, wherein said airbag-deployment determining means (22) determines whether an airbag is to be deployed by comparing a secondary integral value of a composition signal of said three-direction deceleration signals with said threshold for crash pattern corresponding to the crash pattern discriminated in said crash-pattern discriminating means (20).

11. Apparatus as claimed in any one of Claims 2 to 10, wherein clock signals generated from said clock signal generating means (18) are provided to said integrator means (16), said crash-pattern discriminating means (20), said airbag-deployment determining means (22) and said duration detecting means (24) to operate each of them.

12. A method of controlling vehicle airbag deployment, characterised by the steps of:
(a) sensing vehicle deceleration and generating three-direction deceleration signals;
(b) removing high-frequency components of said three-direction deceleration signals;
(c) comparing a first-direction component of said three-direction deceleration signals with a threshold for said first direction;
(d) resetting a clock signal when said first-direction component exceeds said threshold for said first direction as a result of the comparison in step (c) ;
(e) determining whether said first-direction component exceeds said threshold for said first direction for at least a predetermined period;
(f) integrating said three-direction deceleration signals when said predetermined period in step (e) is exceeded;
(g) discriminating a crash pattern based upon the integral value of said three-direction deceleration signals and generating a crash-pattern information value; and
(h) comparing said integral value with a threshold for said crash pattern corresponding to said crash-pattern information value so as to determine whether an airbag is to be deployed.

13. A method as claimed in Claim 12, wherein said three-directions are mutually orthogonal X, Y and Z directions wherein said X-direction is a travelling direction of a vehicle, said Y-direction is a right-left direction thereof, said Z-direction is an upper-lower direction thereof, and said first direction comprises said X-direction.

14. A method as claimed in Claim 12 or 13, wherein said three-direction deceleration signals are integrated once in step (f) and said integral value is the primary integral value of said three-direction deceleration signals.

15. A method as claimed in Claim 12 or 13, wherein said three-direction deceleration signals are integrated twice in step (f) and said integral value is the secondary integral value of said three-direction deceleration signals.

16. A method as claimed in Claim 12, 13, 14 or 15, wherein in step (h), a primary integral value of said first-direction component of said three-direction deceleration signals is compared with said threshold for said crash pattern corresponding to said crash-pattern information value.

17. A method as claimed in Claim 12, 13, 14 or 15, wherein in step (h), a secondary integral value of said first-direction component of said three-direction deceleration signals is compared with said threshold for said crash pattern corresponding to said crash-pattern information value.

18. A method as claimed in Claim 12, 13, 14 or 15, wherein in step (h), a primary integral value of the composition signal of said three-direction deceleration signals is compared with said threshold for said crash pattern corresponding to said crash-pattern information value.

19. A control method as claimed in Claim 12, 13, 14 or 15, wherein in step (h), a secondary integral value of the composition signal of said three-direction deceleration signals is compared with said threshold for said crash pattern corresponding to said crash-pattern information value.
